# EUROPÄISCHE PATENTANMELDUNG

(11) **EP 3 579 073 A1**
(43) Veröffentlichungstag der Anmeldung: **11.12.2019**
(21) Anmeldenummer: 18176310.3
(22) Anmeldetag: 06.06.2018
(51) Int. Cl.: G05B 23/02

(54) **VERFAHREN ZUM AUTOMATISCHEN ZUSAMMENFASSEN VON SIGNATUREN**

(71) Anmelder: Siemens Aktiengesellschaft, 80333 München (DE)
(72) Erfinder: Klos, Hans-Henning, 91249 Weigendorf (DE); Manciu, Sofia, 33758 Schloss Holte-Stukenbrock (DE); Peschke, Jörn, 90489 Nürnberg (DE); Tolksdorf, Schirin, 90461 Nürnberg (DE)

(57) **Zusammenfassung**

Die Erfindung ist ein Verfahren zum automatischen Zusammenfassen (Aggregation) von Signaturen (32), bei dem in zumindest einer Zustandszeitreihe (16) Zustandswechsel und zu einem Zustandswechsel gehörige Anlagenzustände (30) ermittelt werden, wobei als Signaturen (32) Abschnitte in zumindest einer synchronen Datenzeitreihe (14) zwischen zwei aufeinanderfolgenden Anlagenzuständen (30) ermittelt werden, wobei eine Dauer jeder ermittelten Signatur (32) mit einer Minimaldauer (34) verglichen wird und wobei eine Signatur (32) mit einer Dauer kleiner als die Minimaldauer (34) nach einer definierten Regel mit einer benachbarten Signatur (32) zusammengefasst wird.

## Beschreibung

Die Erfindung bezieht sich auf ein Verfahren zum automatischen Zusammenfassen (Aggregation) von Signaturen. Sie bezieht sich weiter auf eine Vorrichtung zur Durchführung des Verfahrens. Eine Signatur ist ein Abschnitt in einer Signalfolge. Eine Signalfolge ergibt sich zum Beispiel als sogenannte Zeitreihe in Form von zeitlich aufeinanderfolgenden Werten, insbesondere Messwerten, aus einem technischen Prozess oder zeitlich aufeinanderfolgenden Steuersignalen für einen technischen Prozess.

Eine Auswertung einer solchen Signalfolge oder solcher Signalfolgen erfolgt oftmals mittels Machine Learning Verfahren. Für Analysen oder grafische Darstellungen von Trainingsdaten für Machine Learning Verfahren oder zur Erzeugung solcher Trainingsdaten ist es häufig notwendig, Daten in Form eines bestimmten Zeitabschnitts eines Signalverlaufs mit einer Information zur Identifikation oder einer Information zur Bedeutung zu versehen ("Labeln"). Eine solche Information kann zum Beispiel die Aussage umfassen, dass der Abschnitt des Signals vom Zeitpunkt t1 bis zum Zeitpunkt t2 den Prozess X darstellt oder aufgrund des Prozesses X resultiert.

Speziell für eine Umsetzung einer Erkennung von Mustern in einzelnen Abschnitten (Signatur) eines zeitlichen Signalverlaufs mittels Machine Learning Verfahren ist regelmäßig eine ausreichend große Anzahl von Trainingsdaten, insbesondere gelabelten Trainingsdaten, erforderlich.

Während die Erfassung von Signalen und gegebenenfalls auch eine Vorverarbeitung, zum Beispiel eine Vorverarbeitung in Form einer Normalisierung, häufig automatisiert werden kann, ist das Erzeugen von als Trainingsdaten verwendbaren Signaturen heute ein manueller Prozess. Dazu müssen von Personen mit Anlagenwissen und/oder Prozesswissen Kontextinformationen eingebracht werden, welche bei der Signaturauswahl verwendet werden. Je nach Anzahl der unterschiedlichen Signaturen und erforderlichen Trainingsdaten kann dies einen sehr hohen Aufwand bedeuten, welcher den Einsatz von Verfahren, die auf gelabelten Daten als Input basieren(zum Beispiel Machine Learning Verfahren oder statistische Auswerteverfahren), einschränkt oder ganz verhindert.

Für eine Auswahl eins Abschnitts eines Signalverlaufs als Signatur und ein grundsätzlich optionales späteres Labeln einer Signatur oder jeder Signatur ist für die oder jede resultierende Signatur eine gewisse minimale Dauer (minimale Länge) sinnvoll.

Eine Aufgabe der vorliegenden Erfindung besteht entsprechend darin, eine Möglichkeit anzugeben, aus einem zeitlichen Signalverlauf - im Folgenden kurz als Zeitreihe bezeichnet - zumindest eine Signatur oder eine Mehrzahl von Signaturen zu erzeugen, die jeweils eine Dauer größer als eine vorgegebene oder vorgebbare Minimaldauer aufweisen.

Diese Aufgabe wird erfindungsgemäß mittels eines Verfahrens zum automatischen Zusammenfassen (Aggregation) von Signaturen mit den Merkmalen des Anspruchs 1 gelöst.

Im Rahmen des Verfahrens ist zum automatischen Zusammenfassen von Signaturen Folgendes vorgesehen:
In zumindest einer mit Bezug auf eine Anlage aufgenommenen Zustandszeitreihe werden Zustandswechsel und zu einem Zustandswechsel gehörige Anlagenzustände ermittelt. Als Signaturen werden Abschnitte zwischen zwei aufeinanderfolgenden Anlagenzuständen in zumindest einer mit Bezug auf die Anlage aufgenommenen, zu der oder jeder Zustandszeitreihe synchronen Datenzeitreihe ermittelt. Eine Dauer jeder ermittelten Signatur wird mit einer vorgegebenen oder vorgebbaren Minimaldauer verglichen. Eine Signatur mit einer Dauer kleiner als die Minimaldauer wird mit einer dieser Signatur unmittelbar vorangehenden oder einer dieser Signatur unmittelbar nachfolgenden Signatur zusammengefasst. Das Zusammenfassen erfolgt nach einer vorgegebenen oder vorgebbaren Regel. Eine mögliche Regel kann zum Beispiel definieren, dass durch das Zusammenfassen eine möglichst kurze Signatur entstehen soll. Unter Geltung einer solchen Regel erfolgt also das Zusammenfassen der ermittelten zu kurzen Signatur mit der dieser Signatur unmittelbar vorangehenden Signatur, wenn die unmittelbar vorangehende Signatur kürzer als die unmittelbar nachfolgende Signatur ist. Wenn die unmittelbar nachfolgende Signatur kürzer ist, erfolgt das Zusammenfassen mit der unmittelbar nachfolgenden Signatur.

Andere mögliche Regeln können zum Beispiel definieren, dass durch das Zusammenfassen eine möglichst lange Signatur entstehen soll, dass die Zusammenfassung immer mit der unmittelbar vorangehenden Signatur erfolgen soll oder dass die Zusammenfassung immer mit der unmittelbar nachfolgenden Signatur erfolgen soll.

Die für die oder jede Zeitreihe (Datenzeitreihe(n), Zustandszeitreihe(n)) aufgenommenen Daten umfassen einerseits Daten, die zum Beispiel mittels einer Sensorik an oder in der jeweiligen Anlage oder dem jeweiligen Prozess aufnehmbar sind und mittels einer Sensorik aufgenommen wurden, welche in zumindest einer Datenzeitreihe zusammengefasst sind, sowie andererseits Zustandswerte zumindest eines anlagenbezogenen Zustands, welche in zumindest einer Zustandszeitreihe zusammengefasst sind. Die Daten werden zeitlich nacheinander aufgenommen, so dass bei der Aufnahme der Daten eine zeitliche Abfolge der Daten resultiert. Die Aufnahme der Daten kann optional in regelmäßigen zeitlichen Abständen erfolgen, insbesondere zu äquidistanten Zeitpunkten. Die Daten können, insbesondere bei einer Aufnahme zu nicht äquidistanten Zeitpunkten, mit einem den Aufnahmezeitpunkt kodierenden Zeitstempel versehen sein. Die Aufnahme der Daten erfolgt optional während eines vorgegebenen oder vorgebbaren Aufnahmezeitraums.

Bei den aufgenommenen Daten kann es sich auch um in Bezug auf die jeweilige Anlage bzw. den jeweiligen Prozess berechnete Daten handeln, insbesondere Daten, welche mittels einer Simulation der Anlage oder eines Anlagenteils bzw. des Prozesses oder eines Prozessabschnitts erzeugt wurden. Die aufgenommenen Daten sind in zumindest einer Datenzeitreihe zusammengefasst. Bei den Zustandswerten kann es sich um an eine Anlage oder einen Prozess ausgegebene digitale oder analoge Steuersignale handeln. Genauso kann es sich bei den Zustandswerten um ebenfalls mittels einer Sensorik aufnehmbare Daten, berechnete Daten oder mittels einer Simulation erzeugte Daten handeln. Die Zustandswerte sind ebenfalls in zumindest einer Zustandszeitreihe zusammengefasst. Eine Unterscheidung in zumindest eine Datenzeitreihe einerseits sowie zumindest eine Zustandszeitreihe andererseits wird vor allem im Hinblick auf eine bessere Lesbarkeit der nachfolgenden Beschreibung vorgenommen.

Der hier vorgeschlagene Ansatz ist besonders gut geeignet für analoge Parameter des jeweiligen technischen Prozesses, die einen großen Wertebereich aufweisen. Der Anwender muss als Vorgabe nur eine Aussage bezüglich der zeitlichen Dauer der interessierenden Prozesse machen (Aufnahmezeitraum). Auf dessen Basis erfolgt dann eine automatische Auswahl einer geeigneten Auflösung der oder jeder betrachteten Zustandszeitreihe.

Die oben genannte Aufgabe wird auch mittels einer Vorrichtung gelöst, welche zur Ausführung des Verfahrens wie hier und im Folgenden beschrieben bestimmt und eingerichtet ist und dazu Mittel zur Durchführung des Verfahrens umfasst. Das Verfahren ist zur automatischen Ausführung in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Vorrichtung, zum Beispiel eine Steuerungseinrichtung, in deren Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen und entsprechend bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch oder zumindest teilweise in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder den Begriffen Steuerungsprogramm und Computerprogramm auch andere Implementationsmöglichkeiten, nämlich insbesondere eine Implementation in Firmware oder in Firm- und Software oder in Firm- und Hardware, umfasst sind.

Für die weitere Beschreibung gilt zur Vermeidung unnötiger Wiederholungen, dass Merkmale und Details, die im Zusammenhang mit dem gegenständlichen Verfahren zur automatischen Zusammenfassung von Signaturen sowie eventueller Ausgestaltungen beschrieben sind, selbstverständlich auch im Zusammenhang mit und im Hinblick auf eine zur Durchführung des Verfahrens eingerichtete Vorrichtung gelten. Folglich gelten Merkmale und Details, die im Zusammenhang mit dem gegenständlichen Verfahren und eventueller Ausgestaltungen beschrieben sind, zumindest auch für eine korrespondierende Vorrichtung, nämlich indem die Vorrichtung Mittel umfasst, welche zur Ausführung sämtlicher Verfahrensschritte bestimmt und eingerichtet sind.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens/der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Verfahrens wird jede Signatur mit einem als Label fungierenden Bezeichner versehen, welcher zumindest einen die Signatur bestimmenden Anlagenzustand umfasst. Dies erfolgt zum Beispiel, indem ein die Signatur und den Bezeichner umfassender Datensatz gebildet wird, wobei der Bezeichner zumindest einen die Signatur bestimmenden Anlagenzustand umfasst. Ein die Signatur bestimmender Anlagenzustand ist zum Beispiel ein Anlagenzustand, welcher den Beginn oder das Ende der Signatur bestimmt. Durch die Zuordnung, also zum Beispiel ein Zusammenfassen in einer Datenstruktur, eine Referenzierung oder dergleichen, wird die Signatur mit dem Bezeichner versehen. Indem der Bezeichner eine Kodierung eines Anlagenzustands umfasst, ist ein automatisches Labeln der Signaturen erreicht. Der Bezeichner (das jeweilige Label) kann zumindest automatisch interpretiert werden und umfasst beispielsweise in kodierter Form Informationen wie "Werkzeug = Bohrer 12mm", "Maschinenachse X vor", "Maschinenachse Y Stillstand".

Bei einer Zusammenfassung zweier Signaturen, also einer Signatur, deren Dauer kürzer als die Minimaldauer ist, mit einer unmittelbar vorangehenden oder unmittelbar nachfolgenden Signatur, gehört zu jeder der beiden zusammengefassten Signaturen ein Anlagenzustand, welcher den Beginn der jeweiligen Signatur bestimmt (Anfangszustand). Die Zusammenfassung der beiden Signaturen erzeugt eine Abfolge von Anlagenzuständen, nämlich den Anfangszustand der ersten Signatur und den Anfangszustand der zweiten Signatur, der zur Unterscheidung als Mittelzustand bezeichnet wird. Diese Anlagenzustände (Anfangszustand, Mittelzustand) werden als einfache Anlagenzustände bezeichnet. Der Mittelzustand ist notwendig unterschiedlich zum Anfangszustand der zusammengesetzten Signatur. Um diesen unterschiedlichen Zustand während der Dauer der Signatur zu berücksichtigen, ist optional vorgesehen, dass als Anlagenzustand, welcher die zusammengesetzte Signatur bestimmt, ein zur Unterscheidung von den einfachen Anlagenzuständen als aggregierter Anlagenzustand bezeichneter Anlagenzustand fungiert. Der aggregierte Anlagenzustand ist eine Kombination des Mittelzustands mit dem Anfangs- und/oder dem Endzustand der zusammengesetzten Signatur.

Bei einer Ausführungsform des Verfahrens wird eine Länge jeder ermittelten oder nach einer Zusammenfassung resultierenden Signatur mit einer vorgegebenen oder vorgebbaren Maximallänge verglichen und Signaturen mit einer die Maximallänge überschreitenden Länge werden ausgeschieden. Durch die Vorgabe der Maximallänge legt der Anwender fest, welche Signaturen wichtig oder potentiell interessant sind. Auf diese Weise werden nicht ausreichend charakteristische Signaturen ausgeschieden.

Bei einer optionalen Ausführungsform des Verfahrens umfasst der als Label der Signatur fungierende Bezeichner einen Zeitstempel, nämlich einen Zeitstempel, welcher den Zeitpunkt des von dem Bezeichner umfassten Anlagenzustands darstellt oder kodiert. Indem der Bezeichner auch einen solchen Zeitstempel umfasst, umfasst dieser einen zusätzlichen Informationsanteil.

Bei einer weiteren Ausführungsform des Verfahrens werden die ermittelten und während des Aufnahmezeitraums erfassten Signaturen in Gruppen zusammengefasst, nämlich in Gruppen, bei denen jede einzelne Gruppe nur Signaturen mit gleichem Anlagenzustand umfasst. Jede Gruppe ist damit eindeutig mit einem jeweiligen Anlagenzustand verknüpft oder jedem Anlagenzustand sind eine Gruppe und die davon umfassten Signaturen zugeordnet. Die Signaturen können im Weiteren zum Beispiel zur Erkennung von Gemeinsamkeiten verarbeitet werden. Dies ermöglicht zum Beispiel bei einer zukünftigen Überwachung der Anlage und bei einem Auftreten einer Abfolge von Daten, welche einer Signatur oder als charakteristisch ermittelten Teilen einer Signatur entspricht, die automatische Erkennung eines jeweiligen Anlagenzustands.

Für eine solche Verarbeitung werden die von einer Gruppe umfassten Signaturen beispielsweise einer zur Ausführung eines Verfahrens zum maschinellen Lernen bestimmten Vorrichtung übermittelt.

Alternativ oder zusätzlich können die von einer Gruppe umfassten Signaturen auch einer Vorrichtung übermittelt werden, welche zur Erstellung einer visuellen Darstellung der Signaturen bestimmt ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine mittels einer Steuerungseinrichtung überwachte technische Anlage und im Rahmen der Überwachung erhältliche und zu zumindest einer Datenzeitreihe sowie zumindest einer Zustandszeitreihe zusammengefasste Daten,
- FIG 2: zwei synchrone Zustandszeitreihen mit davon umfassten Zustandswerten,
- FIG 3: zwei synchrone Zustandszeitreihen und eine dazu synchrone Datenzeitreihe mit aufgrund von Zustandswechseln in zumindest einer Zustandszeitreihe resultierenden Anlagenzuständen und Signaturen als Abschnitten der Datenzeitreihe zwischen zwei aufeinanderfolgenden Zustandswechseln,
- FIG 4: eine Datenstruktur zur Referenzierung von Anlagenzuständen mit Zustandswechseln,
- FIG 5: die Zustandszeitreihen und die Datenzeitreihe gemäß FIG 3 mit einer Zusammenfassung (Aggregation) zweier Signaturen,
- FIG 6: eine alternative Darstellung einer Zusammenfassung (Aggregation) zweier Signaturen,
- FIG 7: Signaturen zusammen mit jeweils einem als Label einer Signatur fungierenden Bezeichner und

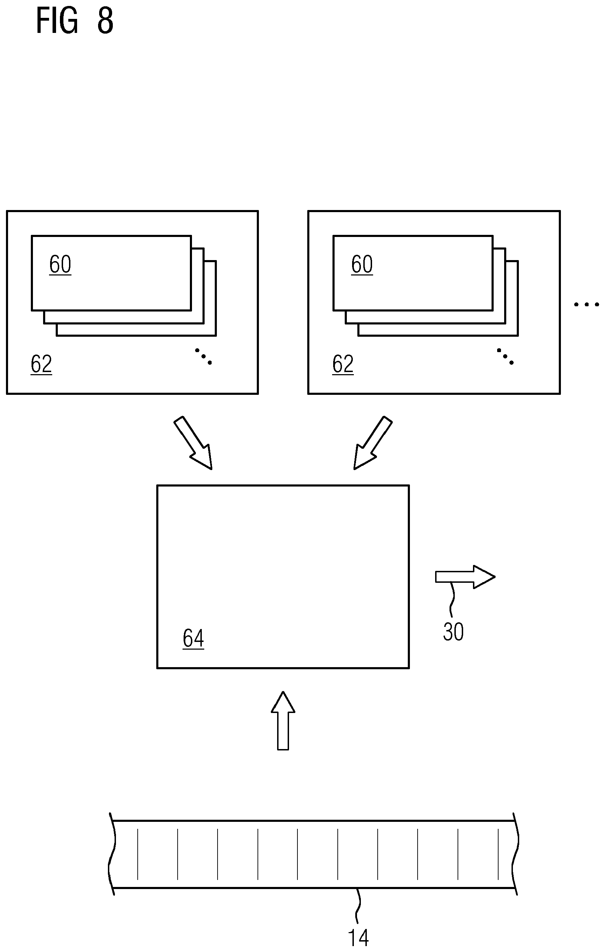

- FIG 8: Gruppen von zusammengehörigen Signaturen mit einer Vorrichtung zu deren Verarbeitung/Auswertung.

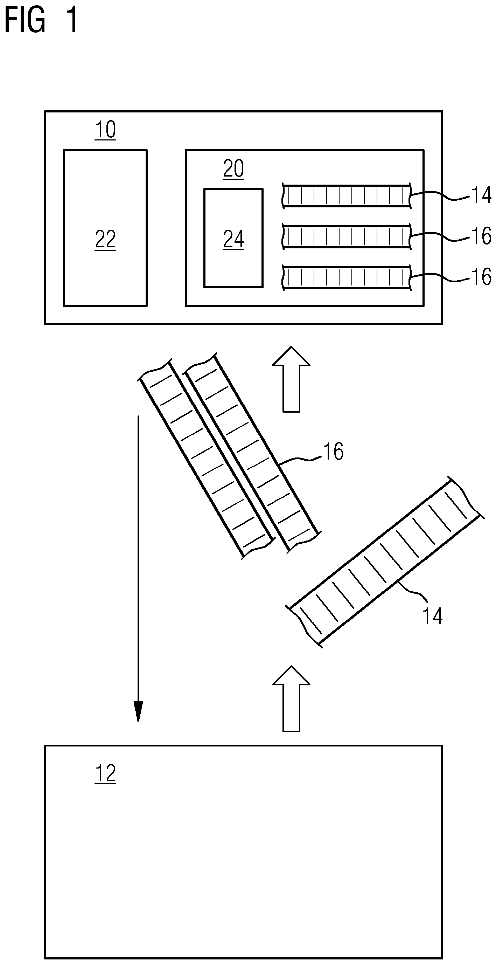

FIG 1 zeigt - in schematisch stark vereinfachter Art und Weise - eine Überwachungseinrichtung 10 und eine grundsätzlich beliebige technische Einrichtung 12. Bei der technischen Einrichtung 12 handelt es sich zum Beispiel um eine Anlage zur Automatisierung eines technischen Prozesses oder eines technischen Teilprozesses. Genauso kann es sich bei der technischen Einrichtung 12 um eine einzelne Maschine oder eine Gruppe von Maschinen, zum Beispiel eine Maschine oder eine Gruppe von Maschinen in einer Anlage zur Automatisierung eines Prozesses oder Teilprozesses handeln. Auf die Art der technischen Einrichtung 12 kommt es nicht an. Im Interesse einer besseren Lesbarkeit der weiteren Beschreibung wird im Folgenden zur Bezeichnung der technischen Einrichtung 12 von einer Anlage 12 gesprochen. Die vorgenannten Beispiele sind dabei jeweils mitzulesen.

Mittels der Überwachungseinrichtung 10 und einer der Überwachungseinrichtung 10 zugeordneten, an sich bekannten und hier nicht gezeigten, insbesondere im Bereich der Anlage 12 platzierten Sensorik wird die jeweilige Anlage 12 überwacht. Diese Überwachung ist in der Darstellung in FIG 1 mittels des von der Überwachungseinrichtung 10 zur Anlage 12 weisenden Pfeils veranschaulicht. Als Ergebnis der Überwachung der Anlage 12 ist zumindest eine Zeitreihe 14 mit mittels der Sensorik aufgenommenen, berechneten oder mittels einer Simulation erzeugten Daten erhältlich. Eine Zeitreihe 14 umfasst in grundsätzlich an sich bekannter Art und Weise eine chronologisch geordnete Abfolge von bei der Anlage 12 oder in Bezug auf die Anlage 12 erfassten Daten. Die Erfassung kann zum Beispiel in regelmäßiger zeitlicher Abfolge, zum Beispiel jede Sekunde, erfolgen. Eine Zeitreihe 14 kann insoweit zum Beispiel Daten zum zeitlichen Verlauf einer Stromaufnahme der Anlage 12 oder in der Anlage 12 umfassen.

Als weiteres Ergebnis der vorgenannten Überwachung sind Daten bezüglich zumindest eines Zustands der Anlage 12 erhältlich. Ein Zustand ist zum Beispiel ein Datum, welches einen Aktivierungszustand (An, Aus etc.) der Anlage 12 oder eines Anlagenteils kodiert. Einem Zustand liegt ein Anlagenparameter zugrunde, zum Beispiel "Anlage an", "Anlagenteil 1 an", "Maschinenachse 1 aktiv", "Übertemperaturüberwachung ausgelöst", "Füllstandssoll erreicht", "Füllstandsmaximum erreicht", "Position Maschinenachse 1", "Füllstand Reaktor 1", "Temperatur Mischer 1" usw. Als Zustände kommen alternativ oder zusätzlich auch berechnete oder mittels einer Simulation erzeugte, insbesondere mittels eines sogenannten Zustandsautomaten (state machine) verarbeitete Zustände in Betracht, welche die jeweilige Anlage 12 oder ein Anlagenteil beschreiben. Auch die Erfassung von Zustandswerten erfolgt über einen längeren Zeitraum, nämlich über einen längeren Zeitraum parallel zu der Erfassung der mittels der Sensorik erfassbaren Daten.

Zur Unterscheidung werden die vorgenannte Zeitreihe 14 im Folgenden als Datenzeitreihe 14 und jede sich auf einen Zustand beziehende Zeitreihe als Zustandszeitreihe 16 bezeichnet. Die Datenzeitreihe 14 und/oder jede Zustandszeitreihe 16 kann bzw. können sich - anstelle einer Auswertung von Daten einer Sensorik -auch aufgrund einer Berechnung, insbesondere einer Berechnung in Form einer Simulation, ergeben.

Die zumindest eine Datenzeitreihe 14 und die Zustandszeitreihen 16 gelangen im Rahmen der Überwachung der Anlage 12 zur Überwachungseinrichtung 10 und werden in einem Speicher 20 gespeichert. Alternativ entstehen die zumindest eine Datenzeitreihe 14 und die Zustandszeitreihen 16 in diesem Speicher 20, indem sukzessiv einzelne, die Datenzeitreihe 14 und die Zustandszeitreihen 16 bildende Daten zur Überwachungseinrichtung 10 gelangen. Dies ist in der Darstellung in FIG 1 mittels der von der Anlage 12 zur Überwachungseinrichtung 10 weisenden Blockpfeile veranschaulicht.

Der Speicher 20 ist zum Beispiel ein von der Überwachungseinrichtung 10 umfasster Speicher 20, kann ebenso aber ein leitungslos oder leitungsgebunden für die Überwachungseinrichtung 10 erreichbarer, von der Überwachungseinrichtung 10 entfernter Speicher 20 sein. Die weitere Beschreibung wird auf Basis eines von der Überwachungseinrichtung 10 umfassten Speichers 20 fortgesetzt. Die Möglichkeit eines entfernten Speichers 20 ist jeweils mitzulesen.

Zur Auswertung der zumindest einen Datenzeitreihe 14 sowie der zumindest einen Zustandszeitreihe 16 umfasst die Überwachungseinrichtung 10 eine Verarbeitungseinheit 22 in Form von oder nach Art eines Mikroprozessors. Dieser führt beim Betrieb der Überwachungseinrichtung 10 ein in den Speicher 20 geladenes Computerprogramm 24 mit einer Implementation des hier vorgeschlagenen Ansatzes aus.

Die nachfolgende Beschreibung bezieht sich auf zumindest eine Datenzeitreihe 14 sowie zwei Zustandszeitreihen 16. Allgemein ist der hier vorgeschlagene Ansatz auf Daten in Form zumindest einer Datenzeitreihe 14 und zumindest einer Zustandszeitreihe 16 anwendbar. Entsprechend sind bei jeder Erwähnung einer Datenzeitreihe 14 auch mehrere Datenzeitreihen 14 mitzulesen und ebenso sind bei jeder Erwähnung von zwei Zustandszeitreihen 16 auch genau eine Zustandszeitreihe 16 und mehr als zwei Zustandszeitreihen 16 mitzulesen.

Die zumindest eine Datenzeitreihe 14 und die Zustandszeitreihen 16 werden während eines vorgegebenen oder vorgebbaren Aufnahmezeitraums aufgenommen.

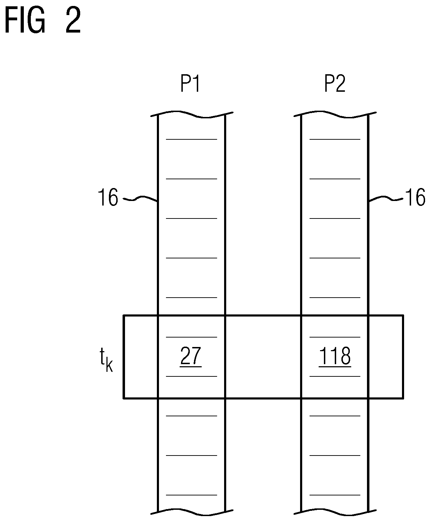

Die von den Zustandszeitreihen 16 umfassten Daten beschreiben unterschiedliche Zustände der Anlage 12. Dies ist in der Darstellung in FIG 2 veranschaulicht, indem dort für zwei synchrone Zustandszeitreihen 16 jeweils der davon umfasste und zum selben Zeitpunkt herrschende Zustandswert des jeweiligen Parameters gezeigt ist. Bei den in Form der Zustandszeitreihen 16 erfassten Zuständen handelt es sich zum Beispiel um eine zeitliche Abfolge von Momentanwerten einer Drehzahl einer Maschinenachse der Anlage 12 und eine zeitliche Abfolge von Momentanwerten einer Stromaufnahme der Maschinenachse.

Die Zustandszeitreihen 16 sind symbolisch mit P1 (erste Zustandszeitreihe 16) und P2 (zweite Zustandszeitreihe 16) bezeichnet. Der betrachtete Zeitpunkt ist symbolisch mit tₖ bezeichnet. Der zum Zeitpunkt tₖ bestehende Zustand der Anlage 12 kann gemäß dem dargestellten Beispiel als durch die Momentanwerte der betrachteten Zustände wie folgt beschrieben bezeichnet werden: P1(tₖ)=27; P2(tₖ)=118. Dies ist eine Beschreibung eines Zustands der Anlage 12. Im Folgenden wird aber auch von einem Zustand eines Parameters gesprochen. Dies bezieht sich auf einen jeweiligen Wert des zur Beschreibung des Zustands betrachteten Parameters. Eine Zeitspanne, während derer sich der Zustand eines Parameters nicht ändert, ist die Dauer dieses Zustands des Parameters (Zustandsdauer).

Jede neue Zustandskombination definiert grundsätzlich einen neuen Zustand der Anlage 12. Bei Parametern, deren Zustandswerte sich sehr schnell ändern - also bei Parametern mit einer kurzen Zustandsdauer -, führt dies zu schnellen Zustandswechseln und zu einer großen Anzahl von Zustandswechseln. Realistisch lässt sich aber auch in automatisierter Form nur eine begrenzte Anzahl von Zuständen betrachten. Deshalb werden Zustände zusammengefasst (Aggregation). Dies soll die Anzahl der möglichen Zustände und damit die Anzahl von während eines Zeitabschnitts auftretenden Zustandswechseln reduzieren.

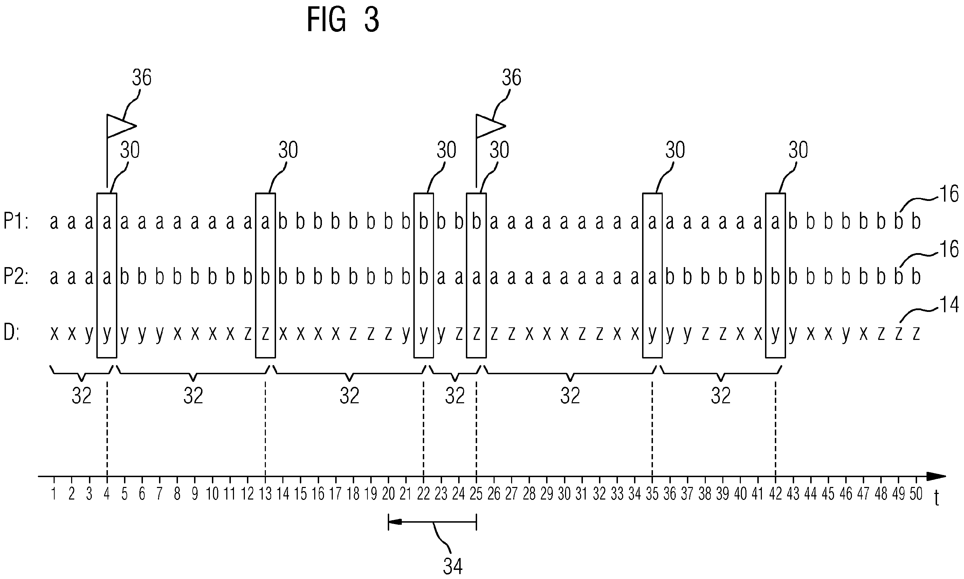

Die Darstellung in FIG 3 zeigt über einer Zeitachse t zwei Zustandszeitreihen 16 mit davon jeweils umfassten, zeitlich aufeinanderfolgenden Parameterwerten. Lediglich beispielhaft und im Interesse einfacher Verhältnisse wird davon ausgegangen, dass es nur zwei (symbolisch mit "a" und "b" bezeichnete) Parameterwerte gibt. In der Realität ist von einer erheblich größeren Anzahl möglicher Parameterwerte auszugehen. Des Weiteren ist ebenfalls lediglich beispielhaft und im Interesse einfacher Verhältnisse nur ein kurzer zeitlicher Abschnitt t=1 bis t=50 der Zustandszeitreihen 16 gezeigt (Aufnahmezeitraum). In der Realität erfolgt die Betrachtung der Zustandszeitreihen 16 regelmäßig über erheblich größere Aufnahmezeiträume.

Die Analyse der Zustandszeitreihen 16 erfolgt in mehreren Durchläufen. Dabei wird sukzessive jeweils der gesamte jeweilige Aufnahmezeitraum betrachtet.

Bei einem ersten Schritt werden im Wege einer Betrachtung der Zustandszeitreihen 16 Zustandswechsel ermittelt, nämlich Zustandswechsel der jeweiligen Anlage 12. Dabei wird bevorzugt der gesamte Aufnahmezeitraum betrachtet, d.h. die Zustandszeitreihen 16 werden "von einem Ende aus", üblicherweise von demjenigen Ende, welches die zeitlich frühesten Parameterwerte umfasst, abgearbeitet (es erfolgt ein "Durchlauf" durch die Zustandszeitreihen 16 entlang des Aufnahmezeitraums). Ein Zustandswechsel ist bei jeder Änderung zumindest eines Parameterwerts (von einem Zeitpunkt zum nächstfolgenden Zeitpunkt) gegeben. Beim dargestellten Beispiel ergibt sich ein erster Zustandswechsel aufgrund einer Änderung des Parameters P2 bei t=5: (P2 (t=4) =a; P2 (t=5) =b) .

Ein Zustand 30 ist dabei die Gesamtheit der Parameterwerte der betrachteten Zustandszeitreihen 16 zum Zeitpunkt des Zustandswechsels, insbesondere die Gesamtheit der Parameterwerte der betrachteten Zustandszeitreihen 16 unmittelbar vor dem Zustandswechsel. Bei der in FIG 3 dargestellten Situation ist der aufgrund der Änderung des Parameters P2 bei t=5 resultierende Zustand 30 der folgende Zustand 30: P1(t=4)=a; P2(t=4)=a.

Eine einem so ermittelten Zustand 30 zugehörige Signatur 32 ist ein Abschnitt der Datenzeitreihe 14 zwischen dem jeweils ermittelten Zustandswechsel und einem unmittelbar vorangehenden (oder unmittelbar nachfolgenden) Zustandswechsel, insbesondere ein Abschnitt der Datenzeitreihe 14 zwischen dem ermittelten aktuellen Zustand 30 und dem zu dem jeweils unmittelbar vorangehenden (oder unmittelbar nachfolgenden) Zustandswechsel gehörenden Zustand 30.

Für jeden auf diese Weise ermittelten Zustand 30 wird eine Bewertung des Zustands 30 vorgenommen. Dafür wird zum Beispiel eine Dauer der dem jeweiligen Zustand 30 zugehörigen Signatur 32 mit einer vorgegebenen oder vorgebbaren Minimaldauer 34 verglichen. Die Minimaldauer 34 ist in der Darstellung in FIG 3 mittels eines Pfeils veranschaulicht. Wenn die Dauer der Signatur 32 kürzer als die Minimaldauer 34 ist, wird der Zustand 30 markiert. Zur Veranschaulichung einer solchen Markierung umfasst die Darstellung in FIG 3 für den Zustand 30 zum Zeitpunkt t=25 eine als Fahne gezeigte Markierung 36.

Bei einer besonderen Ausführungsform wird vor einer Betrachtung einer Dauer einer einem ermittelten Zustand 30 zugehörigen Signatur 32 geprüft, ob dieser Zustand im Aufnahmezeitraum bereits vorgekommen ist und ob dieser Zustand bei einem früheren Vorkommen markiert wurde. Wenn dies der Fall ist, wird auch der jeweils aktuell ermittelte Zustand 30 markiert und zwar ohne Prüfung der Dauer des aktuell ermittelten Zustands 30. Wenn sich dagegen ergibt, dass der aktuell ermittelte Zustand 30 im Aufnahmezeitraum bisher noch nicht vorgekommen ist, wird dessen Dauer geprüft und eine Markierung erfolgt nur, wenn die Dauer kleiner als die Minimaldauer 34 ist.

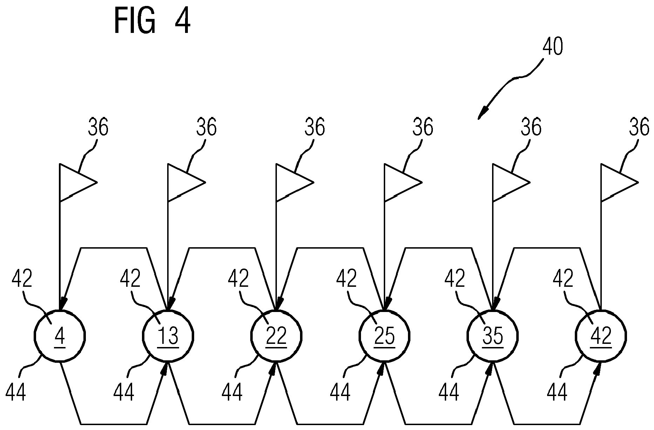

Optional wird bei jedem ermittelten Zustandswechsel der ermittelte Zustand 30 oder ein zu dessen Bezeichnung geeignetes Datum in einer zur Verwaltung einer Vielzahl von Zustandswechseln geeigneten Datenstruktur 40 (FIG 4) gespeichert, zum Beispiel - wie exemplarisch gezeigt - in einer sogenannten verketteten Liste. Auch dieses ist eine - zumindest indirekte - Markierung der ermittelten Zustände 30. Entsprechend umfasst die in der Darstellung in FIG 4 gezeigte Datenstruktur 40 als Fahnen gezeigte Markierungen 36, wobei darauf hinzuweisen ist, dass diese hier keine Daten darstellen, denn die Aufnahme der ermittelten Zustände 30 oder die Aufnahme von zu deren Bezeichnung geeigneten Daten reicht als Markierung aus.

Die entstehende Datenstruktur 40, also zum Beispiel eine einfach oder doppelt verkettete Liste, umfasst als Datum bezüglich jedes ermittelten Zustands 30 zumindest eine den Ort des Zustands 30 entlang der Zustandszeitreihen 16 (oder alternativ relativ zum Beginn oder zum Ende des Aufnahmezeitraums) charakterisierende Zeit- oder Positionsinformation, also insbesondere ein Datum nach Art eines Index 42. In der Darstellung in FIG 4 umfasst die exemplarisch gezeigte Datenstruktur 40 Knoten 44, welche jeweils zumindest ein zur Bezeichnung der ermittelten Zustände 30 geeignetes Datum umfassen, nämlich einen zur Referenzierung der ermittelten Zustände 30 geeigneten Index 42. Eine Datenstruktur 40 wie in FIG 4 ermöglicht das schnelle Auffinden einzelner ermittelter Zustände 30.

Bei der in FIG 4 gezeigten Situation beziehen sich die Indizes 42 auf die in FIG 3 gezeigten und auf den Aufnahmezeitraum bezogenen Positionsinformationen ("4", "13", "22" etc.). Jeder Index 42 bezeichnet indirekt genau einen Zustand 30. Die Datenstruktur 40 kann optional auch unmittelbar Daten zu jedem ermittelten Zustand 30 umfassen, zum Beispiel indem jeder Knoten 44 Daten in einer Form wie "4: aa", "13: ab", "22: bb" usw. umfasst. Weil jeder Index 42 genau einen zuvor ermittelten Zustand 30 bezeichnet oder referenziert und bei der gezeigten Datenstruktur 40 genauso jeder davon umfasste Knoten 44 genau einen zuvor ermittelten Zustand 30 bezeichnet oder referenziert, wird im Folgenden weiterhin von einem Zustand 30 oder den Zuständen 30 gesprochen, auch wenn Daten einer Datenstruktur 40 wie in FIG 4 gemeint sind. Insoweit kann formuliert werden, dass im Falle einer verketteten Liste der aktuelle Zustand 30 zumindest mit dem in der jeweiligen Richtung des Durchlaufs durch die Zustandszeitreihen 16 vorangehenden Zustand 30 verknüpft ("verkettet") wird; tatsächlich erfolgt eine Verknüpfung der Knoten 44. Optional kann dieser vorangehende Zustand 30 seinerseits mit dem ermittelten Zustand 30 verkettet werden. Dann entsteht eine sogenannte doppelt verkettete Liste.

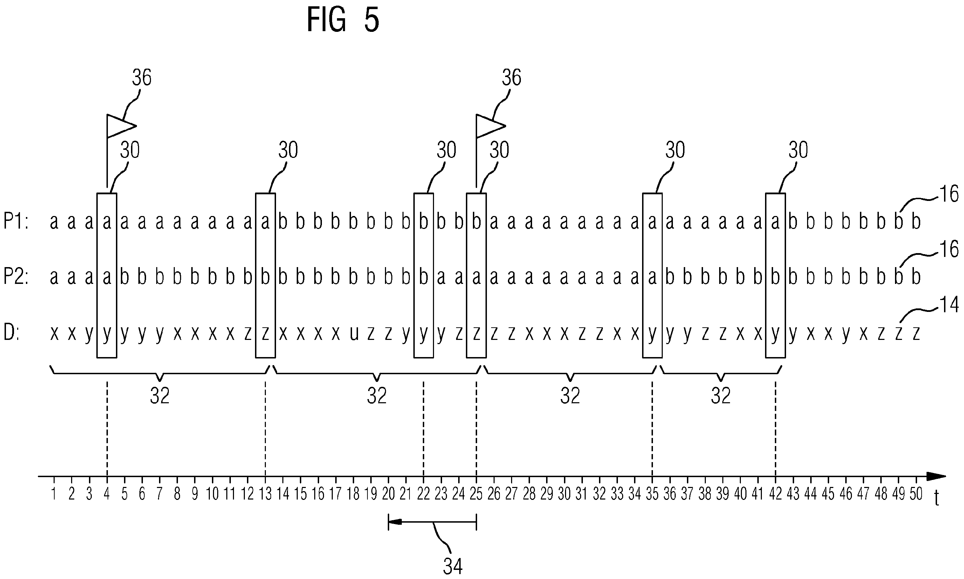

In einem nächsten Schritt (zweiter Schritt) erfolgt eine Zusammenfassung zumindest einer Signatur 32, welche zu einem im ersten Schritt markierten Zustand 30 gehört, entweder mit der Signatur 32 des dem markierten Zustand 30 unmittelbar vorangehenden Zustands 30 oder mit der Signatur 32 des dem markierten Zustand 30 unmittelbar nachfolgenden Zustands 30. Ein Kriterium für die Zusammenfassung mit der Signatur 32 des unmittelbar vorangehenden Zustands 30 oder mit der Signatur 32 des unmittelbar nachfolgenden Zustands 30 ist dabei zum Beispiel, dass durch die Zusammenfassung möglichst kurze Signaturen 32 entstehen sollen. Bei der in FIG 3 gezeigten Situation wird unter diesem Gesichtspunkt (möglichst kurze resultierende Signaturen 32) die Signatur 32 des markierten Zustands 30 - "yzz" - mit der Signatur 32 des unmittelbar vorangehenden Zustand zusammengefasst. Das Ergebnis der Zusammenfassung ist eine "längere" Signatur 32. In der Darstellung in FIG 5 sind ganz links (Zeitpunkt t=1 bis t=13) und in der Bildmitte (Zeitpunkt t=14 bis t=25) die als Ergebnis einer solchen Zusammenfassung resultierenden zusammengefassten Signaturen 32 "xxyyyyyxxxxzz" bzw. "xxxxzzzyyyzz" gezeigt.

Die Abarbeitung dieses zweiten Schritts - also das eigentliche Zusammenfassen (die Aggregation) - kann optional in Form eines Durchlaufs wie im ersten Schritt erfolgen. Dann werden alle im Aufnahmezeitraum vorhandenen markierten Zustände 30 betrachtet. Bei einem solchen Durchlauf wird das Zusammenfassen von Signaturen 32 bevorzugt, ggf. mittels mehrerer Durchläufe, so lange wiederholt, bis es im Aufnahmezeitraum keine Signaturen 32 mehr gibt, deren Länge kürzer als die Minimaldauer 34 ist.

Ein solcher Durchlauf oder ggf. mehrere solcher Durchläufe kann anhand der Zeitreihen 14, 16 (Datenzeitreihe 14, Zustandszeitreihen 16) erfolgen, wobei dann dort die jeweils mit einer Markierung 36 versehenen Zustände 30 aufgesucht werden. Im Falle einer Datenstruktur 40 wie in FIG 4 kann ein solcher Durchlauf oder ggf. mehrere solcher Durchläufe auch anhand der Datenstruktur 40 erfolgen, indem diese in einer Richtung "abgearbeitet" wird, wobei die von der Datenstruktur 40 umfassten Daten dann jeweils zu den zuvor ermittelten Zuständen 30 führen.

Alternativ kann - im Falle einer Datenstruktur 40 wie in FIG 4 - bei der Abarbeitung dieses zweiten Schritts auch ein Zugriff auf eine beliebige Position entlang der Zeitreihen 14, 16 erfolgen, indem nach einem vorgegebenen oder vorgebbaren Schema mittels der Datenstruktur 40 ein Zugriff auf die Zeitreihen 14, 16 erfolgt. Ein einem solchen Zugriff zugrunde liegendes Schema kann grundsätzlich beliebig gewählt werden, zum Beispiel nach Art eines Einschließungsverfahrens. Dann wird zum Beispiel mit einem mittleren Datum der Datenstruktur 40 begonnen (bei der Situation in FIG 4 mit dem mittleren Knoten 44). Die dem davon bezeichneten Zustand 30 zugehörige Signatur 32 wird - wie oben beschrieben - mit einer benachbarten Signatur 32 zusammengefasst. Die erste Auswahl des mittleren Datums der Datenstruktur 40 teilt diese in zwei Hälften. In jeder Hälfte kann erneut ein mittleres Datum ausgewählt und die dem davon bezeichneten Zustand 30 zugehörige Signatur 32 mit einer benachbarten Signatur 32 zusammengefasst werden, und so weiter. Gemäß einem anderen Schema kann ein beliebiges Datum der Datenstruktur 40 (zum Beispiel mittels eines Zufallsgenerators quasizufällig) ausgewählt werden und anschließend die Datenstruktur 40 ausgehend von einer solchen Startposition zunächst in eine Richtung und dann in die andere Richtung abgearbeitet werden. Bei einem weiteren möglichen Schema sind oder werden die von der Datenstruktur 40 umfassten Daten (bei einer Datenstruktur 40 wie in FIG 4 die Knoten 44) sortiert. Die Sortierung erfolgt zum Beispiel nach der Länge der Signaturen 32, nämlich der Länge der Signaturen 32, die zu den von der Datenstruktur 40 umfassten oder von der Datenstruktur 40 referenzierten Zuständen 30 gehören. Dann kann eine Abarbeitung der Datenstruktur 40 entsprechend der Sortierung erfolgen, so dass die resultierende Zusammenfassung von Signaturen 32 mit den kürzesten Signaturen 32 oder mit den längsten Signaturen 32 beginnt. Weitere Schemata sind ebenso denkbar.

Auch hier wird das Zusammenfassen von Signaturen 32 bevorzugt, ggf. mittels mehrerer Durchläufe, so lange wiederholt, bis es im Aufnahmezeitraum keine Signaturen 32 mehr gibt, deren Länge kürzer als die Minimaldauer 34 ist.

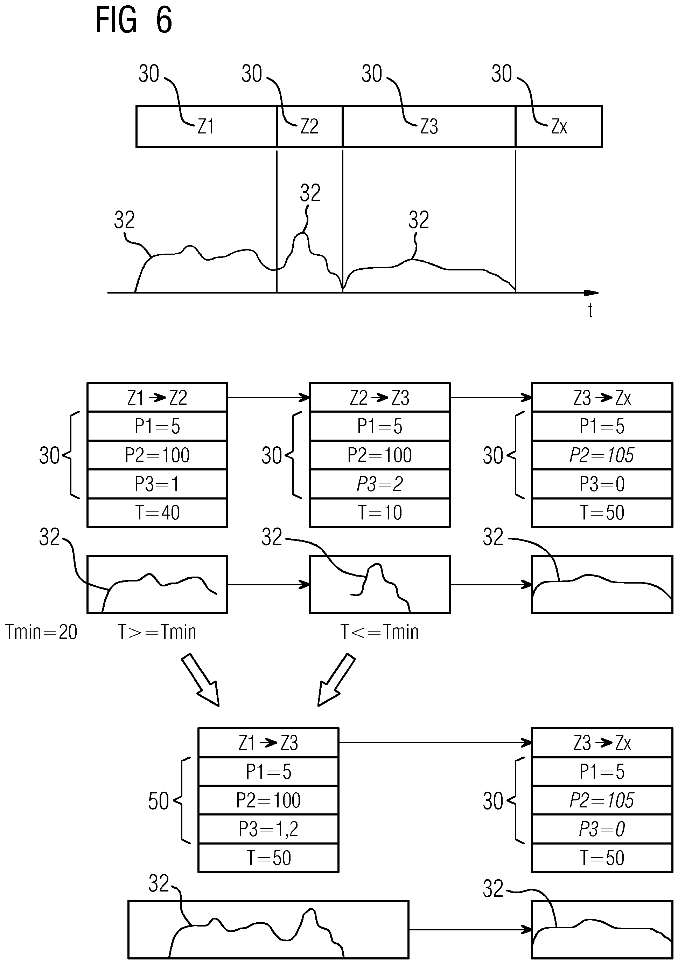

Die Darstellung in FIG 6 zeigt den Sachverhalt der Darstellungen in FIG 3 und FIG 5 in anderer Form und für eine Situation mit drei Parameterwerten (P1, P2, P3) und zugrunde liegenden - selbst nicht gezeigten - Zustandszeitreihen 16.

Ganz oben ist der zeitliche Verlauf der von einer Datenzeitreihe 14 umfassten Daten gezeigt. Daraus ergeben sich - für Abschnitte mit jeweils gleichen Zuständen (Z1, Z2, Z3, Zx) - einzelne Signaturen 32.

Darunter sind die Situationen der von dem gezeigten Aufnahmezeitraum umfassten Zustandswechsel (Z1->Z2; Z2->Z3, Z3->Zx) gezeigt. Ein Zustandswechsel ist immer dann gegeben, wenn sich von einem Zeitpunkt tₖ zum unmittelbar darauffolgenden Zeitpunkt tₖ₊₁ in den betrachteten Zustandszeitreihen 16 zumindest ein Parameterwert ändert. In der Darstellung in FIG 6 sind diejenigen Parameterwerte, die einen Zustandswechsel begründen (zum Beispiel P3=0 bei Z2->Z3), durch Kursivdruck kenntlich gemacht. Ein jeweiliger Zustand 30 (Anlagenzustand 30) ergibt sich als Kombination der Parameterwerte aller betrachteter Zustandszeitreihen 16 zum Zeitpunkt des Zustandswechsels. Zwei aufeinanderfolgende Zustandswechsel definieren einen Abschnitt im Aufnahmezeitraum und zu jedem derartigen Abschnitt gehört eine Signatur 32.

Eine jeweilige Dauer der aufgrund der vorkommenden Zustandswechsel resultierenden Signaturen 32 ist mit T=40, T=10 und T=50 angegeben. Die Minimaldauer 34 ist mit Tₘᵢₙ=20 angegeben. Die Dauer jeder Signatur 32 wird mit der Minimaldauer 34 verglichen. Die Dauer T=10 ist kleiner als die Minimaldauer 34 (T<Tₘᵢₙ). Der Zustand 30 wird markiert und in einem späteren Schritt wird die zugehörige Signatur 32 mit der unmittelbar vorangehenden oder der unmittelbar nachfolgenden Signatur 32 - hier der unmittelbar vorangehenden Signatur 32 - zusammengefasst. Diese Zusammenfassung und die beiden dann resultierenden Signaturen 32 sind in der Darstellung in FIG 6 ganz unten gezeigt.

Über der nach der Zusammenfassung resultierenden Signatur 32 ist ein zugehöriger aggregierter Anlagenzustand 50 gezeigt. Dieser ist eine Kombination der zu der zusammengefassten Signatur 32 gehörigen einfachen Anlagenzustände 30. Als einfache Anlagenzustände 30 werden zur Unterscheidung von einem aggregierten Anlagenzustand 50 die bisher betrachteten Anlagenzustände 30 bezeichnet. Zu der zusammengefassten Signatur 32 gehören ein den Beginn der Signatur 32 mit der Dauer T=40 bestimmender einfacher Anlagenzustand 30 (Anfangszustand) und der den Beginn der Signatur 32 mit der Dauer T=10 bestimmende einfache Anlagenzustand 30 (Mittelzustand). Die Kombination der zu der zusammengefassten Signatur 32 gehörigen einfachen Anlagenzustände 30 (Anfangszustand, Mittelzustand) ist zum Beispiel das Ergebnis einer Mengenoperation. Dabei werden zum Beispiel für jeden Parameter die von den einfachen Anlagenzustände 30 umfassten Parameterwerte zu einer Menge zusammengefasst. Bei Parametern mit gleichen Parameterwerten umfasst die Menge nur ein Element, nämlich den jeweiligen Parameterwert. Bei Parametern mit unterschiedlichen Parameterwerten ergibt sich eine Menge mit zwei Elementen, nämlich den jeweiligen Parameterwerten.

Dies ist in der Darstellung in FIG 6 gezeigt und dort ist mit "P3=1, 2" veranschaulicht, dass die Signatur 32 zu unterschiedlichen Parameterwerten für diesen Parameter gehört (dass die Signatur 32 unterschiedliche Parameterwerte dieses Parameters umfasst), und demnach keine exakten Aussagen über eine eventuelle Korrelation zwischen der Signatur 32 und dem betreffenden Parameter möglich sind. Der aggregierte Anlagenzustand 50 umfasst aber bei der gezeigten Situation zumindest die Information, dass der Parameter in dem zu der Signatur 32 gehörigen Zeitabschnitt entweder einen ersten Parameterwert ("1") oder einen zweiten Parameterwert ("2") annimmt. Der aggregierte Anlagenzustand 50 kann bei nicht eindeutigen Parameterwerten auch eine Liste (Menge) mit den innerhalb des zu der Signatur 32 gehörigen Zeitabschnitts vorkommenden Parameterwerten umfassen, wie sich dies bei der oben genannten Mengenoperation ergibt. Genauso kann ein aggregierter Anlagenzustand 50 bei nicht eindeutigen Parameterwerten einen Wertebereich umfassen, welcher die untere und die obere Grenze der innerhalb des zu der Signatur 32 gehörigen Zeitabschnitts vorkommenden Parameterwerte angibt.

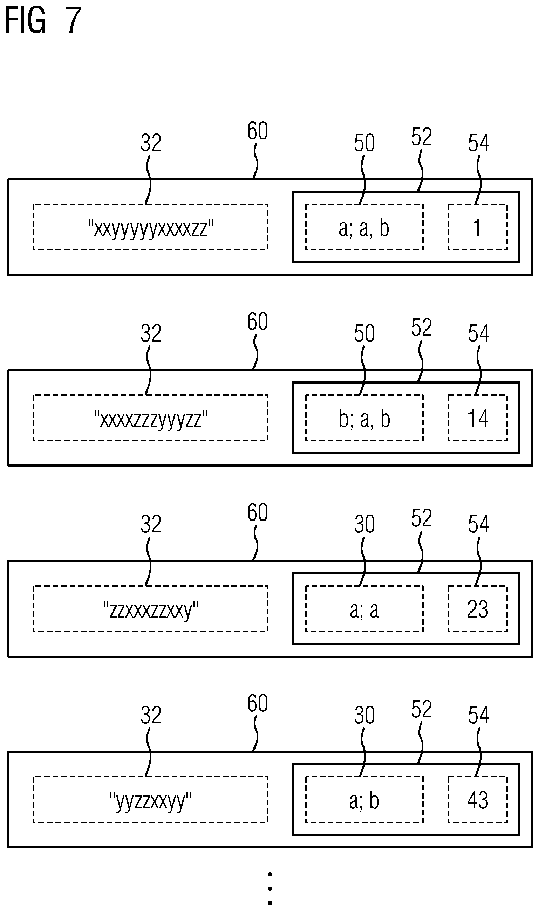

Die Darstellung in FIG 7 zeigt die von der Darstellung in FIG 5 umfassten Signaturen. Nach der Zusammenfassung einzelner Signaturen 32, wobei jede resultierende zusammengefasste Signatur 32 zumindest eine Signatur 32 mit einer Dauer kleiner als die Minimaldauer 34 umfasst, wird jede zu dem anfänglichen Aufnahmezeitraum gehörende Signatur 32 mit einem Bezeichner 52 versehen ("gelabelt").

Das Labeln der Signaturen 32 ist grundsätzlich optional und das bei der hier vorgelegten Beschreibung im Vordergrund stehende Zusammenfassen der Signaturen 32 des Aufnahmezeitraums ist zu diesem Zeitpunkt bereits abgeschlossen. Ein als Label einer Signatur 32 fungierender Bezeichner 52 umfasst zumindest einen zugehörigen Anlagenzustand 30, also zum Beispiel einen Anlagenzustand 30 zum Beginn der Signatur 32 oder einen Anlagenzustand zum Ende der Signatur 32. Die oben beschriebene Bildung eines aggregierten Anlagenzustands 50 - wie in FIG 6 gezeigt - ist eine bevorzugte, aber gleichwohl optionale Ausführungsform. Wenn zu einer zusammengefassten (aggregierten) Signatur 32 ein aggregierter Anlagenzustand 50 gebildet/ermittelt wird, ist bevorzugt vorgesehen, dass ein als Label dieser Signatur 32 fungierender Bezeichner 52 als zugehörigen Anlagenzustand den aggregierten Anlagenzustand 50 umfasst.

Die Darstellung in FIG 7 umfasst die sich aus der in FIG 4 gezeigten Situation ergebenden und symbolisch mit S1, S2 usw. bezeichneten Signaturen 32, wobei die symbolisch mit S1 und S2 bezeichneten Signaturen 32 zusammengefasste Signaturen 32 sind:
S1 = "xxyyyyyxxxxzz", S2 = "xxxxzzzyyyzz",
S3 = "zzxxxzzxxy", S4 = "yyzzxxy"

Jede Signatur 32 umfasst einen Bezeichner 52 mit einem zugehörigen Anlagenzustand 30. Ein Bezeichner 52 einer zusammengefassten Signatur 32 umfasst als zugehörigen Anlagenzustand 30 ggf. einen aggregierten Anlagenzustand 50.

Optional umfasst jeder Bezeichner 52 noch zusätzlich einen Zeitstempel 54, welcher zum Beispiel den Zeitpunkt des Beginns der Signatur 32 kodiert.

Jede Signatur 32 wird zusammen mit ihrem Bezeichner 52 in einem Datensatz 60 zusammengefasst und es ergibt sich eine der Anzahl der Signaturen 32 entsprechende Anzahl von Datensätzen 60. Im vorliegenden, die tatsächlichen Verhältnisse im Interesse einer besseren Lesbarkeit der hier vorgelegten Beschreibung extrem stark vereinfachenden Beispiel ergeben sich vier Datensätze 60. Bei einer konkreten Anwendung des hier vorgeschlagenen Ansatzes ist von vielen Hundert Datensätzen 60 und mehr sowie davon jeweils umfassten gelabelten Signaturen 32 auszugehen.

Optional ist vorgesehen, dass Signaturen 32 mit einer Länge (also einer Anzahl davon umfasster, aufeinander folgender Daten) oberhalb einer vorgegebenen oder vorgebbaren Maximallänge verworfen (ausgeschieden) werden. Dieses Verwerfen erfolgt beispielsweise, indem für solche Signaturen 32 kein Datensatz 60 angelegt wird.

Abschließend werden die Datensätze 60 in grundsätzlich optionaler Art und Weise gruppiert. Das Kriterium für die Gruppierung ist dabei der jeweilige von den Datensätzen 60 umfasste Anlagenzustand 30 (wobei ein eventueller aggregierter Anlagenzustand 50 ebenfalls ein Anlagenzustand 30 ist). Datensätze 60 mit gleichen Anlagenzuständen 30 werden zu einer Gruppe 62 zusammengefasst, wie dies schematisch vereinfacht in FIG 7 gezeigt ist.

Jede Gruppe 62 stellt damit eine Zuordnung von Signaturen 32 zu Anlagenzuständen 30 dar. Alle Datensätze 60 einer Gruppe 62 - also Datensätze 60 mit jeweils übereinstimmenden Anlagenzuständen 30 - können jetzt als Trainingsdaten einer zum Ausführen eines Verfahrens zum maschinellen Lernen (Machine Learning) bestimmten Vorrichtung 64 übermittelt werden. Grundsätzlich besteht hier auch die Möglichkeit, jeweils nur die von den einzelnen Datensätzen 60 umfassten Signaturen 32 zu übermitteln, denn diese werden im Rahmen des maschinellen Lernens berücksichtigt.

Nach einer Verarbeitung solcher Trainingsdaten kann der Vorrichtung 64 zum Beispiel eine während eines aktuellen Betriebs der jeweiligen Anlage 12 aufgenommene Datenzeitreihe 14 oder eine Mehrzahl solcher synchroner Datenzeitreihen 14 übermittelt werden. Die Vorrichtung 64 ermittelt dann anhand der von der oder jeder verarbeiteten Datenzeitreihe 14 umfassten Daten den Anlagenzustand 30 oder eine Abfolge von Anlagenzuständen 30, welcher bzw. welche angesichts der zuvor verarbeiteten Trainingsdaten mit hinreichender Zuverlässigkeit den jeweiligen Daten zugrunde gelegen hat bzw. haben.

Verfahren zum maschinellen Lernen sind grundsätzlich an sich bekannt und nicht Gegenstand der hier vorgeschlagenen Neuerung. Zur Auswertung der Datensätze 60 kommen grundsätzlich beliebige Verfahren zum maschinellen Lernen in Betracht. Bei einer Vorrichtung 64, welche ein Verfahren zum maschinellen Lernen ausführt, handelt es sich in grundsätzlich an sich bekannter Art und Weise um einen Computer oder ein Computersystem, wobei die von einem entsprechenden Computersystem umfassten Geräte und Einrichtungen auch in der sogenannten Cloud verfügbar gemacht sein können. Genauso kann es sich bei der Vorrichtung 64 um die Überwachungseinrichtung 10 aus FIG 1 handeln. Die Vorrichtung 64 ist, insbesondere mittels einer entsprechenden Software, dafür bestimmt und eingerichtet, zumindest ein Verfahren zum maschinellen Lernen auf die Signaturen 32 zumindest einer Gruppe 62 anzuwenden.

Die Vorrichtung 64 ist - in einer optionalen alternativen Ausführungsform - eine Vorrichtung 64, welche zur Erstellung einer visuellen Darstellung der von einer Gruppe 62 umfassten Signaturen 32 oder bei mehreren Gruppen 62 der jeweils von einer Gruppe 62 umfassten Signaturen 32 bestimmt und eingerichtet ist. Die Darstellung erfolgt zum Beispiel in Form einer Webseite und dort in Form jeweils eines sogenannten Dashboards für jede Gruppe 62. Die Vorrichtung 64 ist dann ein Computer oder ein Computersystem der oben genannten Art, welche dafür bestimmt und eingerichtet ist, solche Darstellungen zu erzeugen, insbesondere mittels einer entsprechenden Software.

Die hier vorgeschlagene Aggregation von Signaturen 32 sowie optional auch das Labeln und Gruppieren von Signaturen 32 erfolgt entweder online (online-Verarbeitung), also parallel zur Erfassung der Zeitreihen 14, 16, oder offline (offline-Verarbeitung), also zeitlich nach einer Erfassung der Zeitreihen 14, 16. Die online-Verarbeitung und auch die offline-Verarbeitung, speziell aber die offline-Verarbeitung, kann bevorzugt mittels in der sogenannten Cloud verfügbarer Ressourcen (Rechenleistung, Speicherkapazität) erfolgen und als Mittel zur Ausführung des hier beschriebenen Verfahrens kommt insoweit bevorzugt eine Cloudplattform in Betracht. Eine solche Cloudplattform übernimmt optional auch die Funktion der vorstehend beschriebenen Vorrichtung 64.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Die Erfindung ist ein Verfahren zum automatischen Zusammenfassen (Aggregation) von Signaturen 32, bei dem in zumindest einer mit Bezug auf eine Anlage 12, einen Prozess oder dergleichen - zusammenfassend als Anlage 12 bezeichnet - aufgenommenen Zustandszeitreihe 16 Zustandswechsel und zu einem Zustandswechsel gehörige Anlagenzustände 30 ermittelt werden, wobei als Signaturen 32 Abschnitte in zumindest einer mit Bezug auf die Anlage 12 aufgenommenen, synchronen Datenzeitreihe 14 zwischen zwei aufeinanderfolgenden Anlagenzuständen 30 ermittelt werden, wobei eine Dauer jeder ermittelten Signatur 32 mit einer vorgegebenen oder vorgebbaren Minimaldauer 34 verglichen wird und wobei eine Signatur 32 mit einer Dauer kleiner als die Minimaldauer 34 mit einer benachbarten Signatur 32, nämlich einer dieser Signatur 32 unmittelbar vorangehenden oder unmittelbar nachfolgenden Signatur 32, zusammengefasst wird. Das Zusammenfassen erfolgt nach einer definierten Regel, nämlich nach einer vorgegebenen oder vorgebbaren Regel, welche zum Beispiel bestimmt, dass die ermittelte "zu kurze" Signatur 32 immer mit der unmittelbar vorangehenden Signatur 32 zusammengefasst wird. Bei einer besonderen Ausführungsform des Verfahrens findet neben dem Zusammenfassen der Signaturen 32 (Aggregation der Signaturen 32) auch eine Aggregation der zu den aggregierten Signaturen 32 gehörigen Anlagenzustände 30 statt, so dass sich ggf. aggregierte Anlagenzustände 50 ergeben. Diese sind zum Beispiel das Ergebnis einer Mengenoperation.

## Patentansprüche

1. Verfahren zum automatischen Zusammenfassen von Signaturen (32),
wobei in zumindest einer mit Bezug auf eine Anlage (12) aufgenommenen Zustandszeitreihe (16) Zustandswechsel und zu einem Zustandswechsel gehörige Anlagenzustände (30) ermittelt werden,
wobei als Signaturen (32) Abschnitte in zumindest einer mit Bezug auf die Anlage (12) aufgenommenen, synchronen Datenzeitreihe (14) zwischen zwei aufeinanderfolgenden Anlagenzuständen (30) ermittelt werden,
wobei eine Dauer jeder ermittelten Signatur (32) mit einer vorgegebenen oder vorgebbaren Minimaldauer (34) verglichen wird,
wobei eine Signatur (32) mit einer Dauer kleiner als die Minimaldauer (34) mit einer dieser Signatur (32) unmittelbar vorangehenden oder einer dieser Signatur (32) unmittelbar nachfolgenden Signatur (32) nach einer vorgegebenen oder vorgebbaren Regel zusammengefasst wird.

2. Verfahren nach Anspruch 1,
wobei jede Signatur (32) mit einem als Label fungierenden Bezeichner (52) versehen wird, welcher zumindest einen die Signatur (32) bestimmenden Anlagenzustand (30) umfasst.

3. Verfahren nach Anspruch 2,
wobei der eine Signatur (32) bestimmende Anlagenzustand (30) im Falle einer zusammengefassten Signatur (32) ein aggregierter Anlagenzustand (50) ist und wobei der aggregierte Anlagenzustand (50) eine Kombination zumindest zweier zu der Signatur (32) gehöriger einfacher Anlagenzustände (30) ist.

4. Verfahren nach einem der vorangehenden Ansprüche,
wobei eine Länge jeder ermittelten Signatur (32) mit einer vorgegebenen oder vorgebbaren Maximallänge verglichen wird und wobei Signaturen (32) mit einer die Maximallänge überschreitenden Länge ausgeschieden werden.

5. Verfahren nach einem der vorangehenden Ansprüche,
wobei der Bezeichner (52) einen Zeitstempel (54) umfasst.

6. Verfahren nach einem der vorangehenden Ansprüche,
wobei die ermittelten und während des Aufnahmezeitraums erfassten Signaturen (32) mit gleichem Anlagenzustand (30) zu einer Gruppe (62) zusammengefasst werden.

7. Verfahren nach Anspruch 6,
wobei die von einer Gruppe (62) umfassten Signaturen (32) einer zur Ausführung eines Verfahrens zum maschinellen Lernen bestimmten Vorrichtung (64) übermittelt werden.

8. Verfahren nach Anspruch 6,
wobei die von einer Gruppe (62) umfassten Signaturen (32) einer zur Ausführung einer zur Erstellung einer visuellen Darstellung der Signaturen (32) bestimmten Vorrichtung (64) übermittelt werden.

9. Computerprogramm (24) mit Programmcodemitteln, um alle Schritte von jedem beliebigen der Ansprüche 1 bis 8 durchzuführen, wenn das Computerprogramm (24) auf einem Computer ausgeführt wird.

10. Digitales Speichermedium mit elektronisch auslesbaren Steuersignalen, die so mit einem programmierbaren Gerät, insbesondere einem Computer, zusammenwirken können, dass ein Verfahren nach einem der Ansprüche 1 bis 8 ausgeführt wird.

11. Vorrichtung (10, 64), insbesondere Computer, mit einer Verarbeitungseinheit (22) und einem Speicher (20), in den ein Computerprogramm (24) nach Anspruch 9 geladen ist, das im Betrieb der Vorrichtung (10, 64) durch dessen Verarbeitungseinheit (22) ausgeführt wird.
